# DEMANDE DE BREVET EUROPEEN

(11) **EP 2 075 414 A1**
(43) Date de publication de la demande: **01.07.2009**
(21) Numéro de dépôt: 07124095.6
(22) Date de dépôt: 27.12.2007
(51) Int. Cl.: F01D 9/04, F01D 5/26

(54) **Virole intérieure de stator pour la délimitation d'un flux primaire de turbomoteur d'aéronef**

(71) Demandeur: Techspace Aero, 4041 Milmort - Herstal (BE)
(72) Inventeur: Derclaye, Alain, 4218, Couthuin (BE); Ernst, Philippe, 4700, Eupen (BE); Lebrun, Rodolphe, 5000, Namur (BE); Lourtie, Damien Pierre André, 4020, Liege (BE); Pacchioni, Lorenzo Pietro Bruno, 4690, Roclenge (BE)
(74) Mandataire: Ilgart, Jean-Christophe

(57) **Abrégé**

Virole de stator pour module de turbomoteur d'aéronef, destinée à délimiter radialement vers l'intérieur un flux primaire traversant le turbomoteur, cette virole présentant une section en forme globale de U dort tes deux branches du U (26) s'étendent sensiblement dans une direction radiale intérieure à partir de la base de ce U (32), la virole comprenant une pluralité d'ajours (36) chacun destiné à recevoir le pied d'une aube de stator, chaque ajour étant pratiqué à travers la base du U. Chaque ajour (36) est prolongé par des moyens de raidissement (40) de la virole en saillie à partir de la base du U (32), sensiblement dans la direction radiale intérieure.

## Description

La présente invention se rapporte de façon générale à un turbomoteur d'aéronef, de préférence du type turboréacteur ou turbopropulseur.

Plus particulièrement, l'invention concerne une virole de stator pour module d'un tel turbomoteur, cette virole étant destinée à délimiter radialement vers l'intérieur un flux primaire traversant ce turbomoteur.

La virole, également dite virole intérieure, présente de façon connue une section en forme globale de U, dit U renversé en raison du fait que les deux branches du U s'étendent sensiblement dans une direction radiale intérieure à partir de la base de ce U, dont la surface extérieure est épousée par le flux primaire précité. Une telle virole est par exemple connue du document FR 2 404 102.

Pour maintenir les aubes de stator qui s'étendent radialement vers l'extérieur à partir de celle-ci, la virole intérieure, habituellement métallique, comprend une pluralité d'ajours espacés circonférentiellement, chacun pratiqué dans l'épaisseur de la base du U. A cet égard, il est noté qu'un matériau abradable, pouvant également remplir le rôle d'amortisseur de vibrations, est disposé sur la paroi interne de la virole, et remplit généralement chaque ajour.

Afin de limiter davantage les vibrations subies par les aubes de stator en fonctionnement, il s'avère intéressant de disposer un matériau différent dans les ajours, mieux capable de remplir la fonction d'amortissement des vibrations.

Par conséquent, ce matériau amortisseur se retrouve habituellement agencé autour du pied d'aube associé, entre la paroi intérieure de l'ajour et ce même pied.

Cette solution n'est pas totalement satisfaisante, notamment en terme de facilité de montage qu'elle procure, en particulier en ce qui concerne la mise en place du matériau amortisseur de vibrations dans les ajours, avant le montage des aubes de stator.

L'invention a donc pour but de proposer une virole de stator pour module de turbomoteur remédiant au moins partiellement au problème mentionné ci-dessus, relatif aux réalisations de l'art antérieur.

Pour ce faire, l'invention a pour objet une virole de stator pour module de turbomoteur d'aéronef, destinée à délimiter radialement vers l'intérieur un flux primaire traversant ledit turbomoteur, ladite virole présentant une section de forme générale ouverte dans une direction radiale intérieure, et comprenant une base de délimitation du flux primaire, ladite virole comprenant une pluralité d'ajours chacun destiné à recevoir le pied d'une aube de stator, chaque ajour étant pratiqué à travers ladite base. Selon l'invention, chaque ajour est prolongé par des moyens de raidissement de la virole en saillie à partir de ladite base, sensiblement dans ladite direction radiale intérieure.

Par conséquent, l'invention est remarquable en ce que chaque ajour ne s'étend plus seulement sur l'épaisseur de la base de la virole tel que cela était le cas antérieurement, mais est prolongé radialement vers l'intérieur par des moyens en saillie servant simultanément à raidir la virole. L'emploi de matériaux autres que des matériaux métalliques peut ainsi être envisagé, grâce à la rigidité procurée par l'adjonction de ces moyens de raidissement. Comme cela sera décrit ultérieurement, l'emploi d'un matériau composite devient donc envisageable, ce qui procure un avantage réel en terme de masse, en particulier par rapport aux solutions métalliques connues de l'art antérieur.

Surtout, il a été remarqué que l'allongement dans la direction radiale de l'ajour offre une plus grande facilité de mise en place du matériau amortisseur de vibrations dans cet ajour, en particulier en ce sens où ce matériau amortisseur a moins tendance à s'échapper de l'ajour durant sa mise en place, lui permettant ainsi de rester mieux confiné dans l'endroit souhaité.

Par exemple, il est possible de couler le matériau abradable formant piste d'étanchéité, qui sera décrit ci-après, en ayant au préalable disposé des bouchons dans les cavités ainsi formées autour des ajours, créant de ce fait une cavité fermée radialement vers l'intérieur qu'il suffit de remplir avec le matériau amortisseur de vibrations après retrait des bouchons, une fois le matériau abradable solidifié.

De plus, l'épaisseur radiale de matériau amortisseur de vibrations est plus importante, ce qui améliore l'amortissement, par rapport au cas où malgré les difficultés de pose, on parvenait à mettre en place un cordon de matériau amortisseur dans l'ajour. Cet amortissement est davantage amélioré lorsque l'épaisseur circonférentielle de matériau amortisseur de vibrations est également augmentée.

Par ailleurs, l'allongement radial des ajours offre un plus grand espace pour y intégrer des moyens mécaniques de rétention d'aubes, tels que des clips ou des plaquettes. Dans ce dernier cas, les plaquettes de rétention traversant les pieds d'aubes de stator peuvent facilement traverser les moyens de raidissement en saillie, ce qui assure de manière simple et efficace leur maintien par rapport à la virole selon l'invention.

En outre, toujours en raison de la présence d'ajours s'étendant sur une distance supérieure à l'épaisseur de la base de la virole formant seulement une partie de ces ajours, les aubes se trouvent mieux maintenues, avec une précision de positionnement accrue.

Enfin, les moyens de raidissement forment des barrières physiques entre les ajours, facilitant ainsi la mise en place ultérieure d'éléments dans les espaces formés par ces barrières, comme cela sera explicité ci-après.

De préférence, la virole présente une section en forme globale de U dont les deux branches du U s'étendent sensiblement dans une direction radiale intérieure, à partir de la base de ce U. Néanmoins, d'autres formes sont envisageables pour la section ouverte radialement vers l'intérieur, sans sortir du cadre de l'invention. A titre d'exemple illustratif, il peut être supprimé la branche aval du U.

De préférence, pour chaque ajour, lesdits moyens de raidissement prennent la forme d'une nervure en saillie à partir de ladite base, ladite nervure s'étendant sur sensiblement tout le pourtour de l'ajour qu'elle définit. Ainsi, la nervure suit de préférence une ligne fermée correspondant au pourtour de l'ajour, ce dernier étant donc constitué d'une part à l'aide de l'ouverture pratiquée dans la base de la virole, et d'autre part par la nervure fermée définissant intérieurement un espace de même géométrie que l'ouverture précitée qu'il prolonge, garantissant de ce fait un ajour sensiblement homogène et continue.

Néanmoins, sans sortir du cadre de l'invention, la nervure pourrait être réalisée à l'aide de deux demi-nervures placées respectivement de part et d'autre de l'ajour, espacées circonférentiellement, et s'étendant chacune de l'une à l'autre des deux branches du U. En outre, dans le cas mentionné ci-dessus de la nervure continue et fermée, cette même nervure peut également contacter chacune des deux branches du U, en se fondant dans celles-ci.

De préférence, comme évoqué ci-dessus, un espace ouvert dans ladite direction radiale intérieure est formé entre deux ajours quelconques directement consécutifs, ledit espace ouvert étant délimité dans la direction radiale extérieure par la base, et dans les deux sens de la direction circonférentielle par les deux nervures des deux ajours quelconques directement consécutifs, respectivement. A titre indicatif, ces espaces ouverts, destinés à être remplis ultérieurement, sont préférentiellement rencontrés quel que soit le type de moyens de raidissement adopté.

Pour un gain de masse et de coût, la virole est préférentiellement réalisée en matériau composite, de préférence comprenant une résine thermoplastique, par exemple associée à des fibres de carbone et/ou à des fibres de verre. A titre d'exemple indicatif, il peut s'agir d'une résine thermoplastique du type polyetherimide.

Afin d'assurer une géométrie et une qualité de réalisation satisfaisantes, propices à un bon écoulement aérodynamique du flux primaire sur la virole intérieure, celle-ci est de préférence réalisée par moulage par injection de matériau composite, de préférence à haute pression.

Selon un mode de réalisation envisagé, la virole décrite ci-dessus forme une pièce unique continue, par exemple réalisée d'un seul tenant, ou à l'aide de secteurs angulaires rapportés fixement les uns aux autres, bout à bout.

A cet égard, selon un autre mode de réalisation envisagé, la virole est réalisée de façon segmentée à l'aide de plusieurs secteurs angulaires adjacents, chacun étant pourvu d'une pluralité d'ajours. Cette configuration se révèle particulièrement intéressante en ce sens où elle autorise un faible déplacement relatif des secteurs les uns par rapport aux autres, un tel déplacement pouvant en effet survenir suite à une dilatation thermique différentielle des composants du stator, et résultant par exemple de l'emploi de matériaux différents pour la réalisation de la virole extérieure supportant les aubes et pour la réalisation de la virole intérieure objet de l'invention.

Dans cette configuration segmentée circonférentiellement, les secteurs angulaires formant conjointement la virole sont donc dépourvus de liaisons mécaniques rigides directes les reliant les uns aux autres, de faibles jeux pouvant même être prévus entre-ceux-ci. A cet égard, les secteurs sont montés sur le stator de préférence uniquement par le biais des aubes qu'ils portent. Cela facilite notamment les opérations de maintenance, étant donné qu'il est possible de démonter chacun des secteurs angulaires indépendamment les uns des autres, par exemple sans retirer les aubes qui peuvent rester maintenue à leur extrémité radiale externe par la virole extérieure de stator.

La segmentation de la virole permet en outre l'emploi d'un outillage de fabrication simplifié, moins coûteux, et plus facile d'utilisation.

A cet égard, l'invention concerne également un tel secteur angulaire de virole, destiné à la constitution de la virole décrite ci-dessus. Par conséquent, un autre objet de l'invention se rapporte alors à un secteur angulaire de virole de stator pour module de turbomoteur d'aéronef, destiné à délimiter radialement vers l'intérieur un flux primaire traversant ledit turbomoteur, ledit secteur présentant une section de forme globale ouverte dans une direction radiale intérieure, et comprenant un base de délimitation du flux primaire, ledit secteur comprenant une pluralité d'ajours chacun destiné à recevoir le pied d'une aube de stator, chaque ajour étant pratiqué à travers ladite base. Selon l'invention, chaque ajour est prolongé par des moyens de raidissement du secteur de virole en saillie à partir de ladite base, sensiblement dans ladite direction radiale intérieure.

Ici aussi, ledit secteur présente de préférence une section en forme globale de U dont les deux branches du U s'étendent sensiblement dans une direction radiale intérieure, à partir de la base de ce U, même si d'autres configurations sont envisageables, sans sortir du cadre de l'invention.

D'autre part, il est à comprendre que le secteur de virole selon l'invention est susceptible de présenter chacune des caractéristiques particulières décrites ci-dessus pour la virole elle-même, sans sortir du cadre de l'invention.

Par ailleurs, l'invention a aussi pour objet une partie de stator pour module de turbomoteur d'aéronef comprenant une virole telle que décrite ci-dessus, que celle-ci soit réalisée de façon segmentée ou de manière à former une pièce unique et continue.

Préférentiellement, un revêtement radialement intérieur formant piste d'étanchéité annulaire, destiné à être contacté par une partie tournante dudit turbomoteur, est rapporté sur ladite virole. De façon connue, ce revêtement dit abradable est généralement contacté par un dispositif d'étanchéité porté par le rotor associé au stator concerné, un tel dispositif d'étanchéité étant qualifié de labyrinthe ou de dispositif à léchettes. Dans le cas d'une virole continue formée par une unique pièce, le revêtement est également préférentiellement continu sur 360°, tandis que dans le cas d'une virole segmentée telle qu'exposée ci-dessus, le revêtement est préférentiellement segmenté d'une manière sensiblement identique à celle de la virole.

De préférence, ledit revêtement radialement intérieur pénètre au moins partiellement dans lesdits espaces ouverts décrits ci-dessus. La pénétration de ce revêtement dans les espaces ouverts peut donc être partielle ou totale, avec dans ce dernier cas, aucun autre élément prévu entre la virole et ce revêtement. Néanmoins, des solutions dans lesquelles le revêtement formant piste d'étanchéité ne pénètre pas dans ces espaces ouverts peuvent être envisagées, sans sortir du cadre de l'invention.

D'autre part, on peut faire en sorte que ledit revêtement radialement intérieur formant piste abradable soit réalisé dans un premier matériau, et que des moyens de remplissage réalisés dans un second matériau soient logés au moins partiellement dans lesdits espaces ouverts, en étant interposés entre ladite virole et ledit revêtement radialement intérieur, ledit second matériau présentant une densité plus faible que ledit premier matériau.

Cette configuration permet de ne remplir que partiellement les espaces ouverts avec le revêtement radialement intérieur en premier matériau, voire de ne pas le remplir du tout avec ce premier matériau de densité plus forte que le second matériau constitutif des moyens de remplissage occupant les espaces ouverts. Avec cet agencement où les moyens de remplissage de plus faible densité occupent tout ou partie des espaces ouverts, voire s'étendant au-delà de ces derniers, il en résulte un gain de masse non négligeable. A titre indicatif, le rapport entre les deux densités est préférentiellement inférieur à 0,1.

Dans le cas préférentiel d'une virole intérieure segmentée, il est prévu que lesdits secteurs angulaires adjacents soient dépourvus de support. Comme mentionné ci-dessus, les secteurs sont alors montés sur le stator de préférence uniquement par le biais des aubes qu'ils portent, et qui sont elles-mêmes destinées à être rattachées à la virole extérieure.

De préférence, la partie de stator comprend une pluralité d'aubes de stator chacune montée dans un ajour de ladite virole, chaque ajour étant rempli d'un matériau amortisseur de vibrations coopérant avec le pied de l'aube de stator associée. De préférence, le matériau amortisseur de vibrations est prévu pour épouser l'intégralité de la surface de délimitation de l'ajour, et forme une bande continue et fermée autour du pied d'aube de stator qu'il entoure.

De plus, on peut prévoir qu'à chaque ajour sont associés des moyens mécaniques de rétention de l'aube de stator associée, lesdits moyens mécaniques de rétention coopérant avec lesdits moyens de raidissement formant partie dudit ajour.

Selon un premier type de réalisation, les moyens mécaniques de rétention prennent la forme d'un clip présentant un support en appui sur une extrémité radiale intérieure des moyens de raidissement, ainsi qu'une fente de rétention de pied d'aube portée par ledit support et pénétrant dans l'ajour.

Selon un second type de réalisation, les moyens mécaniques de rétention prennent la forme d'une plaquette de rétention traversant lesdits moyens de raidissement de l'ajour, ainsi que le pied de l'aube de stator logé dans l'ajour.

L'invention a également pour objet un module de turbomoteur d'aéronef comprenant au moins une partie de stator telle que décrite ci-dessus, le module étant préférentiellement un compresseur, de préférence basse pression, mais pouvant alternativement être une turbine, sans sortir du cadre de l'invention.

Enfin, l'invention a pour objet un turbomoteur pour aéronef comprenant au moins un module tel que décrit ci-dessus, le turbomoteur étant de préférence un turboréacteur.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique partielle d'un compresseur basse pression pour turbomoteur, selon un mode de réalisation préféré de la présente invention ;
- la figure 2 représente une vue en perspective d'un ensemble participant à la formation d'une partie de stator du compresseur montré sur la figure 1 ;
- la figure 3 représente une vue agrandie et détaillée en perspective d'une partie de l'ensemble montré sur la figure 2 ;
- la figure 4 représente une vue éclatée de celle montrée sur la figure 3 ;
- la figure 5 représente une vue en perspective, depuis l'intérieur, du secteur angulaire de virole appartenant à l'ensemble montré sur les figures 2 à 4 ;
- la figure 6 représente une vue en coupe prise le long de la ligne VI-VI de la figure 5 ;
- les figure 7 à 9 représentent schématiquement les différentes étapes d'obtention de l'ensemble montré sur les figures 2 à 4 ;
- la figure 10 représente une vue partielle en perspective du secteur angulaire de virole montré sur la figure 5, dont l'un des ajours à été représenté équipé d'un dispositif mécanique de rétention d'aube selon une première forme de réalisation ;
- la figure 11 représente une vue détaillée en perspective du dispositif mécanique de rétention d'aube montré sur la figure 10 ;
- la figure 12 représente une vue en coupe prise le long de la ligne XII-XII de la figure 10 ; et
- la figure 13 représente une vue partielle en perspective du secteur angulaire de virole montré sur la figure 5, dont l'un des ajours à été représenté équipé d'un dispositif mécanique de rétention d'aube selon une seconde forme de réalisation.

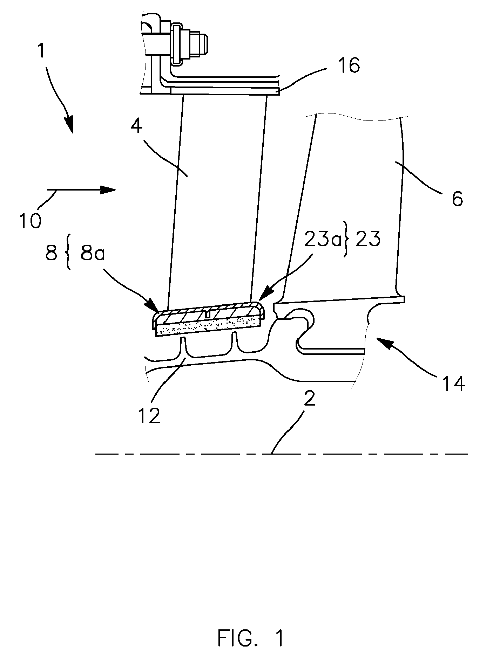

En référence tout d'abord à la figure 1, on peut apercevoir une partie d'un compresseur basse pression 1 pour turbomoteur, selon un mode de réalisation préféré de la présente invention. De façon connue, le compresseur présente, en alternance selon une direction axiale parallèle à l'axe 2 du compresseur, des aubes de stator 4 et des aubes de rotor 6. Les aubes de stator 4, réparties circonférentiellement autour de l'axe 2, s'intègrent dans une partie de stator également objet de l'invention, comprenant en outre une virole intérieure 8 de délimitation radiale intérieure d'un flux annulaire primaire 10 traversant le turbomoteur, cette virole 8 portant les pieds des aubes 4 qui la traversent. A cet égard, il est noté que la partie de stator comprend également des éléments additionnels rapportés sur la virole 8, qui seront décrits ultérieurement, tel qu'un revêtement radialement intérieur abradable formant piste d'étanchéité annulaire, contactée par un dispositif d'étanchéité 12 porté par l'étage de rotor 14 portant les aubes tournantes 6 et agencé en aval de la partie de stator concernée. Comme mentionné ci-dessus, le dispositif d'étanchéité tournant 12 est de façon connue du type à labyrinthe ou à léchettes.

A cet égard, la virole 8 fait partie intégrante d'une structure annulaire de stator portant la référence 23 sur la figure 1.

Comme visible sur cette figure 1, il est prévu que le stator du compresseur comprenne également une virole extérieure 16 de délimitation radiale extérieure du flux annulaire primaire 10 traversant le turbomoteur, cette virole 16 portant les têtes des aubes 4 de la partie de stator précitée.

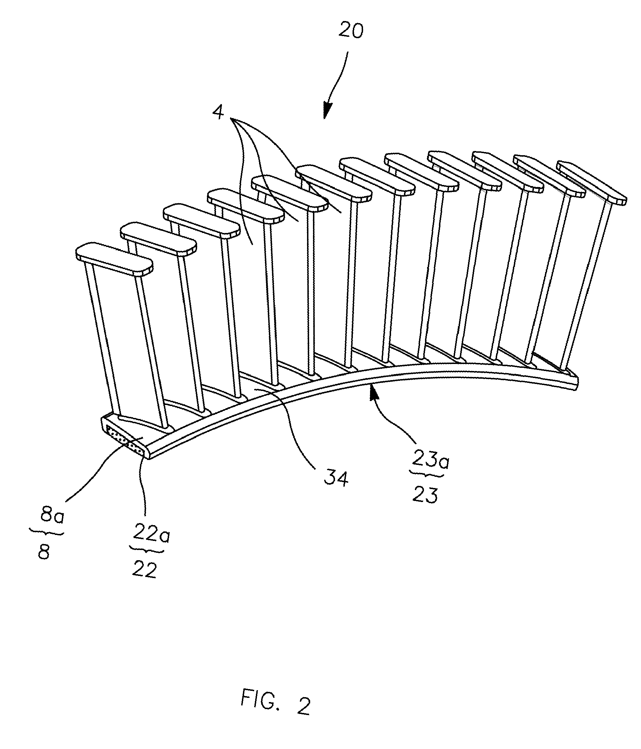

Cette partie de stator est préférentiellement composée par la mise en place d'une pluralité d'ensembles 20 comme celui montré sur la figure 2, constituant chacun une portion angulaire ou circonférentielle de cette partie de stator. Comme visible sur cette figure, chaque ensemble 20 comprend un secteur angulaire de virole 8a portant une pluralité d'aubes de stator 4, la virole 8 résultant de la mise en place de tous les secteurs 8a sur le stator adoptant donc une conception dite segmentée, par opposition à une conception également envisagée, dite continue, dans laquelle la virole est unique et continue sur 360°. Dans la configuration segmentée représentée, les secteurs angulaires 8a (un seul visible sur la figure 2) formant conjointement la virole 8 sont donc de préférence dépourvus de liaisons mécaniques rigides directes les reliant les uns aux autres, leurs extrémités adjacentes étant en effet simplement placées en regard les unes les autres, avec ou sans jeu.

La segmentation opérée pour la virole 8 est également adoptée, d'une manière identique, pour le revêtement radialement intérieur abradable formant piste d'étanchéité annulaire 22, seul un secteur angulaire 22a de ce revêtement annulaire 22 étant porté fixement par le secteur de virole 8a.

A titre indicatif, il est noté que le nombre d'ensembles 20 pour former la partie de stator annulaire précitée peut être compris entre 6 et 14, chaque ensemble 20 présentant de préférence la même étendue angulaire/circonférentielle.

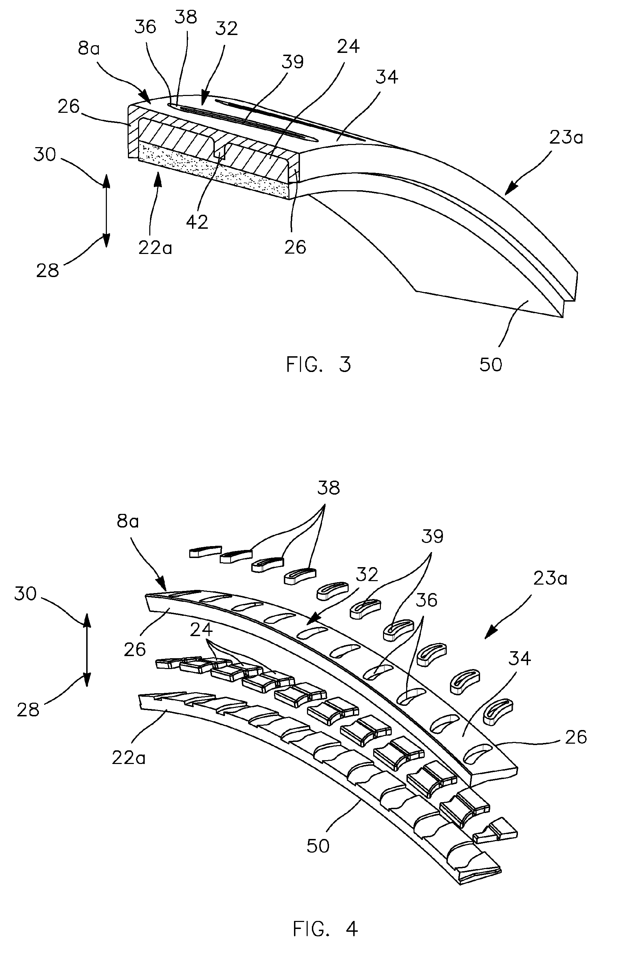

Plus précisément en référence aux figures 3 et 4, l'ensemble 20 comprend, outre les aubes 4 qui ont été volontairement retirées, le secteur de virole 8a, le secteur de revêtement abradable 22a, et, interposés entre ces deux secteurs, des moyens de remplissage 24 qui seront détaillés ci-après. Les secteurs 8a, 22a et les moyens 24 forment conjointement un secteur de structure annulaire 23 de l'ensemble 20, ce secteur portant la référence numérique 23a.

Le secteur 8a présente une section en forme globale de U inversé dont les deux branches 26 du U s'étendent sensiblement dans une direction radiale intérieure 28, à partir de la base 32 de ce U. La surface extérieure 34 de ce U, orientée selon une direction radiale extérieure 30, est celle assurant la délimitation intérieure du flux primaire du turbomoteur. En outre, le secteur 8a comprend une pluralité d'ajours 36 espacés circonférentiellement, chacun destiné à recevoir le pied d'une aube de stator, et étant réalisé en partie à travers la base du U 32.

Pour la réception du pied de l'aube de stator, chaque ajour 36 est rempli d'un matériau amortisseur de vibrations 38 entourant le pied de l'aube associée. Ce matériau amortisseur de vibrations 38 est de préférence prévu pour épouser l'intégralité de la surface de délimitation de l'ajour 36, et forme par conséquent une bande continue et fermée autour du pied d'aube qu'il entoure. Ainsi, il présente d'une part une fente de logement 39 dont la géométrie correspond à la contre-forme du pied d'aube qu'elle reçoit, et d'autre part une surface extérieure correspondant à la contre-forme de la paroi intérieure de l'ajour 36, qui elle aussi présente une forme sensiblement identique ou similaire à celle du pied d'aube, mais agrandie.

Ce matériau 38 amortisseur de vibrations des aubes de stator est par exemple en résine de silicone, de préférence en silicone dit structural, c'est-à-dire présentant une dureté faible, par exemple comprise entre 25 et 45 shore A.

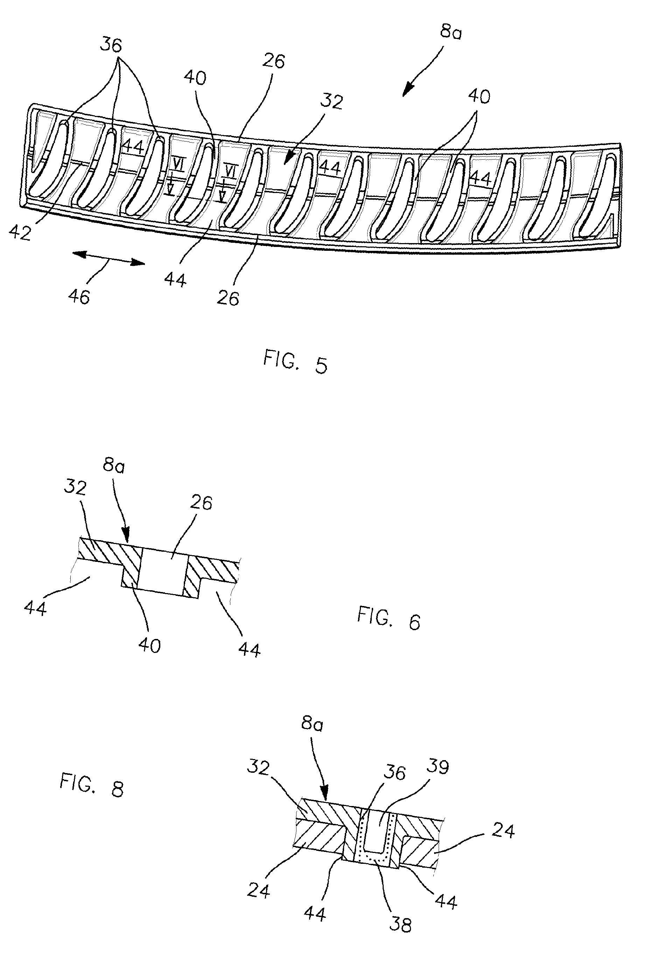

En référence à présent aux figures 5 et 6, il est montré l'une des particularités de la présente invention, à savoir la conception des ajours 36. Ces derniers ne sont en effet pas seulement pratiqués dans l'épaisseur de la base du U 32, mais prolongés radialement vers l'intérieur par des moyens de raidissement du secteur prenant ici la forme d'une nervure 40 en saillie à partir de cette base 32. Chaque nervure 40 s'étend de façon fermée sur tout le pourtour de l'ajour 36 qu'elle définit, conjointement avec l'ouverture pratiquée dans la base 32 qu'elle prolonge, de sorte qu'elle adopte une géométrie sensiblement identique ou similaire à celle du pied, mais agrandie. Comme visible sur la figure 5, la nervure 40 peut être rattachée sur les branches du U 26 en se fondant dans celles-ci, respectivement au niveau des portions de l'ajour en regard du bord d'attaque et du bord de fuite du pied d'aube.

A titre indicatif, le rapport entre l'épaisseur de la base du U 32 traversée par l'ajour et la distance radiale en saillie de la nervure 40 complétant ce même ajour est de préférence compris entre 1 et 1/3.

La nervure fermée 40, qui pourrait alternativement prendre la forme de deux demi-nervures placées respectivement de part et d'autre de l'ajour 36 en s'étendant chacune de l'une à l'autre des deux branches du U 26, sans être reliées l'une à l'autre à leurs extrémités, permet de renforcer la rigidité du secteur 8a. A cet égard, il peut également être prévu une nervure circonférentielle 42 faisant aussi saillie radialement intérieurement à partir de la base 32, en étant interrompue par les ajours 36 au niveau des nervures 40. Quoi qu'il en soit, en raison de la présence des nervures 40, un espace 44 ouvert dans la direction radiale intérieure est formé entre deux ajours 36 directement consécutifs. Cet espace 44 est délimité dans la direction radiale extérieure par la base 32 du U, et dans les deux sens de la direction circonférentielle 46 par les deux nervures 40 des deux ajours concernés, respectivement.

Le secteur de virole 8a, comprenant les éléments 26, 32, 40 et 42, est de préférence réalisé d'une seule pièce par moulage par injection haute pression de matériau composite thermoplastique, comprenant par exemple un mélange de résine polyetherimide et de fibres de carbone et/ou de fibres de verre.

Pour la fabrication et le montage de l'ensemble montré sur la figure 2, il est prévu qu'une fois le secteur de virole 8a obtenu, ses espaces ouverts 44 soient chacun partiellement comblé par les moyens de remplissage 24, prenant par exemple la forme de blocs de mousse, de préférence non-métallique et à cellules fermées, telle que de la mousse rigide polymethacrylimide, par exemple celle commercialisée sous la marque ROHACELL® de la société Degussa-Rohacell. D'autres mousses de polymères à faible densité peuvent être utilisées, telles que la mousse de polyuréthane ou de polyetherimide. D'une façon générale, les moyens de remplissage 24 sont réalisés dans un matériau léger dont la densité est plus faible que celle du matériau constituant le revêtement abradable intérieur déposé ultérieurement, le rapport entre les densités étant de préférence inférieur à 0,1.

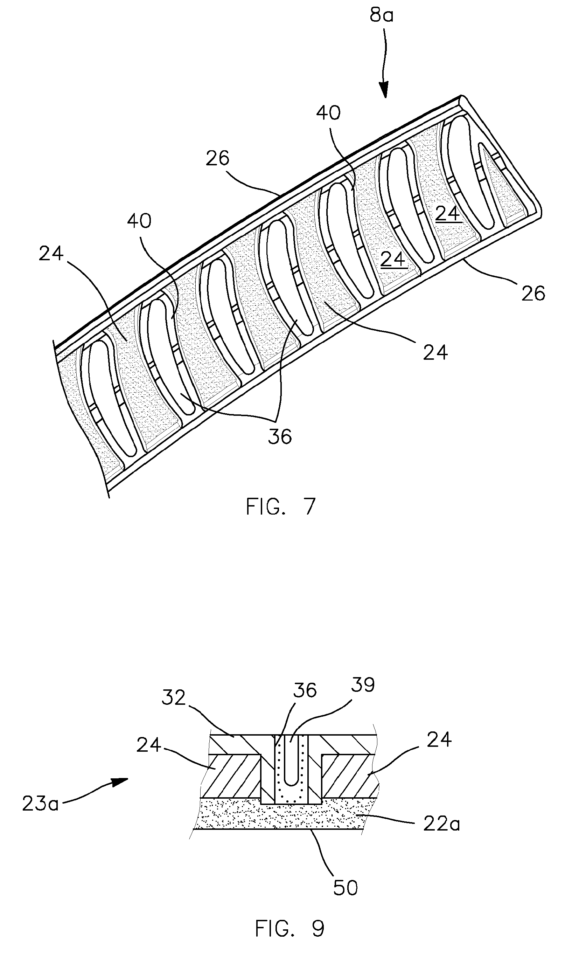

Ainsi, chaque espace 44 est rempli partiellement par un même bloc de mousse 24 de section sensiblement identique à celle de l'espace 44 qu'il occupe, afin d'épouser simultanément la base 32 et les branches 26 du U, ainsi que les deux nervures 40 délimitant cette espace, comme montré sur la figure 7. De plus, comme montré sur la figure 4, chaque bloc 24 peut présenter une rainure sur sa face radialement supérieure, pour le passage de la nervure circonférentielle 42.

Dans ce mode de réalisation préféré, le bloc de mousse formant matériau léger de remplissage ne s'étend donc pas dans tout son espace 44 associé dans la direction radiale intérieure, même si cela pourrait être le cas. A cet égard, il pourrait même s'étendre au-delà de cet espace, sans sortir du cadre de l'invention.

Ensuite, même si cette opération pourrait être réalisée antérieurement à la précédente, la paroi intérieure des ajours 36 est équipée du contour de matériau amortisseur de vibrations 38, qui s'étend sur toute la longueur de l'ajour concerné en laissant apparaître la fente de logement d'aube 39, traversante ou non, comme le montre la figure 8. De préférence, le contour 38 s'étend jusqu'à l'extrémité radiale interne de l'ajour 36, sans faire saillie de celui-ci. Le matériau utilisé est préférentiellement du type résine de silicone à faible dureté, de manière à présenter de bonnes caractéristiques d'amortissement.

A cet égard, il est noté que la résine de silicone structural d'amortissement des vibrations se présente préférentiellement sous forme de liquide légèrement visqueux. Ainsi, il est alors possible de réaliser des préformes en silicone structural ou en élastomère laissant apparaître la fente de logement d'aube 39, ces préformes pouvant ensuite être mises en place dans leurs ajours respectifs 36 avant de réaliser le secteur de revêtement 22a.

Comme évoqué ci-dessus, il est alternativement possible de réaliser d'abord le secteur de revêtement abradable 22a en prévoyant des bouchons dans les ajours 36, puis de monter le secteur de virole autour des aubes, avant de remplir les ajours avec le silicone structural d'amortissement des vibrations, une fois les bouchons retirés.

Dans le cas illustré par les figures où le silicone structural d'amortissement des vibrations est d'abord mis en place, le procédé est poursuivi en réalisant le secteur de revêtement 22a, celui-ci ayant une partie radiale externe pénétrant dans les portions des espaces 44 non comblées par les blocs de mousse 24 déjà installés, cette partie radiale externe étant donc interrompue dans la direction circonférentielle par les ajours 36. Par ailleurs, sa partie radiale interne est quant à elle continue tout le long du secteur 8a, et forme la piste d'étanchéité 50 destinée à être contactée par le joint à labyrinthe précité, tel que cela est visible sur la figure 9. De plus, comme cela est montré sur la figure 3, le secteur de revêtement abradable 22a se prolonge radialement vers l'intérieur au-delà des branches du U 26.

De préférence, le secteur 22a est réalisé en élastomère de silicone, de densité supérieure à celle de la mousse des blocs de remplissage 24, par exemple du type silicone RTV.

Une fois le secteur de structure annulaire 23a obtenu, bien que cela n'ait pas été représenté, les pieds des aubes de stator sont insérés dans les fentes de logement 39 prévues à cet effet, et l'ensemble 20 qui en résulte monté sur le stator du compresseur par fixation de ces mêmes aubes sur la virole extérieure 16.

Chaque ajour 36 peut, en plus de loger le matériau d'amortisseur de vibrations 38, être équipé de moyens mécaniques de rétention de l'aube de stator associée à cet ajour.

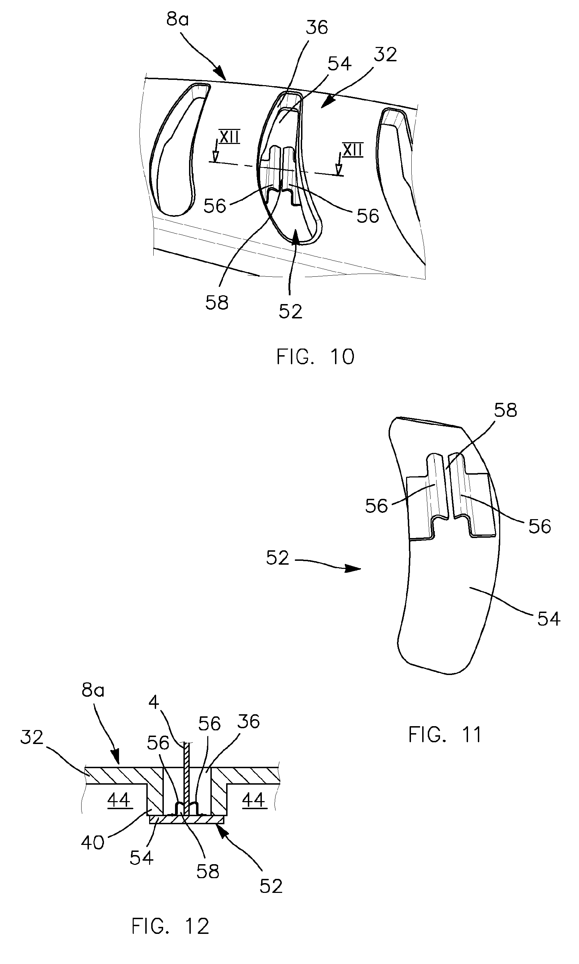

Selon une première forme de réalisation montrée sur les figures 10 à 12, ces moyens prennent la forme d'un clip 52 présentant un support 54 en appui sur l'extrémité radiale intérieure de la nervure 40, délimitant en partie l'ajour concerné. Ce support 54, situé en dehors de l'ajour 36, porte radialement vers l'extérieur deux bras élastiques de rétention 56 pénétrant dans l'ajour, et définissant une fente de rétention 58 de pied de l'aube 4. En effet, le pied inséré dans la fente 58 est maintenu par le serrage exercé par les deux bras 56, étant ici noté que l'espace de l'ajour 36 non occupé par le clip 52 peut être comblé par le matériau amortisseur de vibrations décrit ci-dessus.

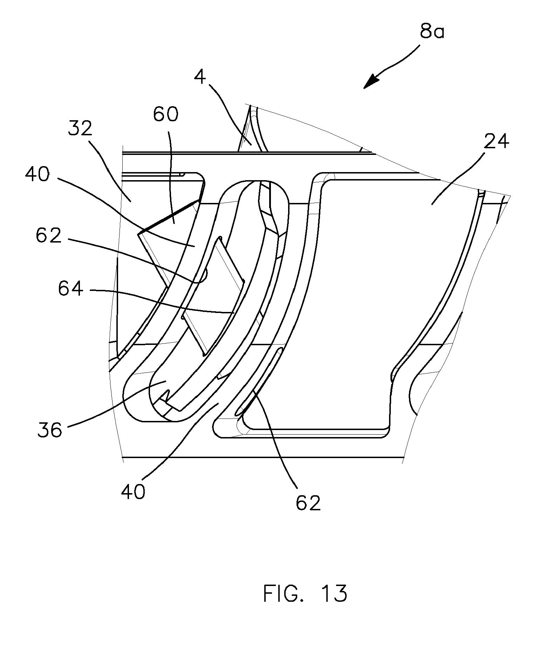

Selon une seconde forme de réalisation montrée sur la figure 13, les moyens mécaniques de rétention prennent, pour chaque ajour, la forme d'une plaquette de rétention 60 traversant deux orifices opposés 62 de la nervure 40, ainsi qu'un orifice 64 prévu dans le pied de l'aube de stator, et aligné avec les deux orifices 62 entre lesquels il se situe. La plaquette 60, de forme par exemple sensiblement parallélépipédique, se retrouve donc située radialement vers l'intérieur de la base du U 32, de préférence sans contact avec celle-ci, tout en lui étant sensiblement parallèle. A titre indicatif, sur la figure 13, la plaquette 60 est représentée dans une configuration en cours de montage, puisqu'elle n'a pas encore été glissée dans le second orifice 62 de la nervure 40.

Bien entendu, diverses modifications peuvent être apportées par l'homme du métier à l'invention qui vient d'être décrite, uniquement à titre d'exemples non limitatifs.

## Revendications

1. Virole de stator (8) pour module de turbomoteur d'aéronef, destinée à délimiter radialement vers l'intérieur un flux primaire (10) traversant ledit turbomoteur, ladite virole présentant une section de forme générale ouverte dans une direction radiale intérieure (28), et comprenant une base (32) de délimitation du flux primaire, ladite virole comprenant une pluralité d'ajours (36) chacun destiné à recevoir le pied d'une aube de stator (4), chaque ajour étant pratiqué à travers ladite base (32),
**caractérisée en ce que** chaque ajour (36) est prolongé par des moyens de raidissement (40) de la virole en saillie à partir de ladite base (32), sensiblement dans ladite direction radiale intérieure (28).

2. Virole selon la revendication 1,
**caractérisée en ce qu'**elle présente une section en forme globale de U dont les deux branches du U (26) s'étendent sensiblement dans ladite direction radiale intérieure, à partir de la base de ce U (32).

3. Virole selon la revendication 1 ou la revendication 2, **caractérisée en ce que** pour chaque ajour, lesdits moyens de raidissement prennent la forme d'une nervure (40) en saillie à partir de ladite base (32), ladite nervure s'étendant sur sensiblement tout le pourtour de l'ajour (36) qu'elle définit.

4. Virole selon la revendication 3,
**caractérisée en ce qu'**un espace (44) ouvert dans ladite direction radiale intérieure est formé entre deux ajours (36) quelconques directement consécutifs, ledit espace ouvert (44) étant délimité dans la direction radiale extérieure (30) par la base (32), et dans les deux sens de la direction circonférentielle (46) par les deux nervures (40) des deux ajours quelconques directement consécutifs, respectivement.

5. Virole selon l'une quelconque des revendications précédentes, **caractérisée en ce qu'**elle est réalisée en matériau composite.

6. Virole selon la revendication 5,
**caractérisée en ce que** ledit matériau composite comprend une résine thermoplastique.

7. Virole selon la revendication 6,
**caractérisée en ce que** ladite résine thermoplastique est une résine polyetherimide.

8. Virole selon l'une quelconque des revendications précédentes, **caractérisée en ce qu'**elle est réalisée par moulage par injection de matériau composite.

9. Virole selon l'une quelconque des revendications précédentes, **caractérisée en ce qu'**elle est réalisée de façon segmentée à l'aide de plusieurs secteurs angulaires adjacents (8a), chacun étant pourvu d'une pluralité d'ajours (36).

10. Secteur angulaire (8a) de virole de stator (8) pour module de turbomoteur d'aéronef, destiné à délimiter radialement vers l'intérieur un flux primaire (10) traversant ledit turbomoteur, ledit secteur présentant une section de forme générale ouverte dans une direction radiale intérieure (28), et comprenant une base (32) de délimitation du flux primaire, ledit secteur comprenant une pluralité d'ajours (36) chacun destiné à recevoir le pied d'une aube de stator (4), chaque ajour étant pratiqué à travers ladite base,
**caractérisé en ce que** chaque ajour (36) est prolongé par des moyens de raidissement (40) du secteur de virole en saillie à partir de ladite base (32), sensiblement dans ladite direction radiale intérieure (28).

11. Secteur angulaire (8a) de virole selon la revendication 10, **caractérisée en ce qu'**il présente une section en forme globale de U dont les deux branches du U (26) s'étendent sensiblement dans ladite direction radiale intérieure à partir de la base de ce U (32).

12. Partie de stator pour module de turbomoteur d'aéronef comprenant une virole (8) selon l'une quelconque des revendications 1 à 9.

13. Partie de stator selon la revendication 12, **caractérisée en ce qu'**un revêtement radialement intérieur (22) formant piste d'étanchéité annulaire (50), destiné à être contacté par une partie tournante (12) dudit turbomoteur, est rapporté sur ladite virole (8).

14. Partie de stator selon la revendication 13 combinée à la revendication 4, **caractérisée en ce que** ledit revêtement radialement intérieur (22) pénètre au moins partiellement dans lesdits espaces ouverts (44).

15. Partie de stator selon la revendication 13 ou la revendication 14, combinée à la revendication 4, **caractérisée en ce que** ledit revêtement radialement intérieur (22) formant piste est réalisé dans un premier matériau, et **en ce que** des moyens de remplissage (24) réalisés dans un second matériau sont logés au moins partiellement dans lesdits espaces ouverts (44), en étant interposés entre ladite virole (8) et ledit revêtement radialement intérieur (22), ledit second matériau présentant une densité plus faible que ledit premier matériau.

16. Partie de stator selon l'une quelconque des revendications 12 à 15, combinée à la revendication 9, **caractérisée en ce que** lesdits secteurs angulaires adjacents (8a) sont dépourvus de support.

17. Partie de stator selon l'une quelconque des revendications 12 à 16, **caractérisée en ce qu'**elle comprend une pluralité d'aubes de stator (4) chacune montée dans un ajour (36) de ladite virole, chaque ajour étant rempli d'un matériau amortisseur de vibrations (38) coopérant avec le pied de l'aube de stator associée.

18. Partie de stator selon l'une quelconque des revendications 12 à 17, **caractérisée en ce qu'**à chaque ajour sont associés des moyens mécaniques de rétention de l'aube de stator associée, lesdits moyens mécaniques de rétention coopérant avec lesdits moyens de raidissement (40) formant partie dudit ajour (36).

19. Partie de stator selon la revendication 18, **caractérisée en ce que** les moyens mécaniques de rétention prennent la forme d'un clip (52) présentant un support (54) en appui sur une extrémité radiale intérieure des moyens de raidissement (40), ainsi qu'une fente (58) de rétention de pied d'aube portée par ledit support et pénétrant dans l'ajour (36).

20. Partie de stator selon la revendication 18, **caractérisée en ce que** les moyens mécaniques de rétention prennent la forme d'une plaquette de rétention (60) traversant lesdits moyens de raidissement (40) de l'ajour (36), ainsi que le pied de l'aube de stator logé dans l'ajour.

21. Module de turbomoteur d'aéronef comprenant au moins une partie de stator selon l'une quelconque des revendications 12 à 20.

22. Module selon la revendication 21,
**caractérisé qu'**il est un compresseur, de préférence basse pression.

23. Turbomoteur pour aéronef comprenant au moins un module selon la revendication 21 ou la revendication 22.
